# EUROPÄISCHE PATENTSCHRIFT

(11) **EP 2 121 280 B1**
(45) Veröffentlichungstag und Bekanntmachung des Hinweises auf die Patenterteilung: **05.03.2014**
(21) Anmeldenummer: 07856849.0
(22) Anmeldetag: 18.12.2007
(51) Int. Cl.: B29C 45/82, F04B 49/06, F04B 49/20

(54) **ELEKTROHYDRAULISCHE STEUERANORDNUNG**
ELECTRO-HYDRAULIC CONTROL ARRANGEMENT
SYSTÈME DE CONTRÔLE ÉLECTROHYDRAULIQUE

(30) Priorität: 08.02.2007 DE 102007007005
(43) Veröffentlichungstag der Anmeldung: 25.11.2009
(73) Patentinhaber: ROBERT BOSCH GMBH, 70469 Stuttgart (DE)
(72) Erfinder: SCHMIDT, Stefan, 97816 Lohr am Main (DE); DÖRR, Heribert, 97854 Steinfeld-Hausen (DE)
(74) Vertreter: Thürer, Andreas
(86) Internationale Anmeldenummer: PCT/EP2007/011124
(87) Internationale Veröffentlichungsnummer: WO 2008/095525

(56) Entgegenhaltungen:
- EP-A- 0 464 286
- DE-C1- 4 335 403
- US-A- 5 865 602

## Beschreibung

Die Erfindung betrifft eine elektrohydraulische Steueranordnung zur Ansteuerung eines hydraulischen Verbrauchers gemäß dem Oberbegriff des Patentanspruchs 1.

Elektrohydraulische Antriebe kommen z.B. für Anwendungen zum Einsatz, bei denen hohe Stellkräfte bei kleinen Abmessungen der Stellorgane sowie eine präzise Steuerung des hydraulisch verstellten Maschinenteils gefordert ist.

Ein Konzept für die Ansteuerung der hydraulischen Verbraucher einer Spritzgießmaschine ist in der EP 0 403 041 A2 der Anmelderin dargestellt. Eine Konstantpumpe ist mit einem hydraulischen Verbraucher nach Art einer hydraulischen Kraft-/ Weg-Übersetzung direkt verbunden. Die Konstantpumpe wird mittels eines drehzahlvariablen, elektrischen Servoantriebs betätigt. Der Geschwindigkeitsregelkreis des Servoantriebs ist einer Positionsregelung oder einer Druckregelung des Verbrauchers unterlagert.

Gerade beim Halten eines Schließdruckes wird bei sehr geringen Drehzahlen ein hohes Drehmoment benötigt, um mittels der Konstantpumpe einen hohen Druck zu halten. Nachteilig an diesem Antriebskonzept ist daher, dass ein kräftiger, groß dimensionierter und folglich auch teurer Servomotor benötigt wird, der auch bei geringen Drehzahlen ein ausreichendes Drehmoment aufbringen kann.

Ein weiterer elektrohydraulischer Antrieb für eine Spritzgießmaschine ist in der EP 0 464 286 B2 beschrieben. Verschiedene Verbraucher, wie Kolben-Zylinder-Einheiten zum Schließen der Form und für den Materialvorschub in der Einspritzeinrichtung sowie zum Antreiben einer Schnecke werden mittels einer Verstellpumpe und einer Ventileinheit angesteuert. Die Verstellpumpe wird in der bekannten Art und Weise im Rahmen einer Förderstromregelung oder einer Druckregelung betrieben. Verstellpumpen mit einer zugehörigen Regeleinrichtung bietet die Anmelderin unter der Bezeichnung SYDFEE - siehe Datenblatt RD 30630/06.06 - an. Der in der vorgenannten Patentschrift beschriebene Antrieb besitzt zusätzlich einen drehzahlvariablen Elektromotor zum Antreiben der Verstellpumpe. Der Bedarf an Druckmittel, d.h. die benötigte Fördermenge der Verstellpumpe wird für die einzelnen Phasen des Spritzgießprozesses im Voraus berechnet. Die Fördermengenwerte werden in Drehzahlwerte für den Elektromotor umgerechnet und in einem Ablaufsteuergerät gespeichert. Das Ablaufsteuergerät steuert den Elektromotor mittels der vorgegeben Drehzahlwerte an.

Nachteilig an diesem Konzept ist die aufwendige Vorausberechnung der benötigten Drehzahlen. Dies macht die Erstellung und ggf. Änderung eines Ablaufprogramms unnötig kompliziert. Außerdem muss bei der Festlegung der Drehzahlwerte immer eine gewisse Reserve an Förderkapazität - z.B. für erhöhte Reibung bzw. Verschleiß - vorab eingeplant werden. Dies führt zu Energieverlusten im Betrieb.

Weitere elektrohydraulische Steueranordnungen mit einer verstellbaren Fluidpumpe und einem drehzahlvariablen Antrieb sind aus der DE 43 35 403 C1 und der US-A-5 865 602 bekannt.

Die DE 43 35 403 C1 zeigt einen Hauptregelkreis einer Hydraulikeinrichtung, bestehend aus einem Zylinder, der von einer Fluidpumpe mit Hydraulikmedium versorgt wird, einem Streckenspannungswandler zur Erfassung der Position des Zylinders, und einer Steuerung, an die das Positionssignal geliefert wird und die ein Proportionalmengenventil einstellt, das wiederum als Stellglied die Zuteilung des Hydraulikmediums zum Zylinder übernimmt. Ein Regelorgan der Regelpumpe sorgt für ein konstantes Betriebsdruckgefälle am Ventil. Hierzu führt ein Hilfsregelkreis den Druck-Istwert und den Ausgangsdruck der Regelpumpe auf das Regelorgan. Der Hilfsregelkreis unterstützt den Hauptregelkreis durch Konstanthalten des Betriebsdruckgefälles, unabhängig davon, ob der Motor die Drehzahl ändert.

Aus der US-A-5 865 602 ist ein Regelkreis eines Hydraulikversorgungssystems bekannt, in dem die Auslenkung einer Taumelscheibe einer Pumpe mit dem Ziel einer schnellen Dynamikantwort geregelt wird. Die Drehzahleinstellung eines Elektromotors erfolgt nachgeordnet in Abhängigkeit der Taumelscheibenauslenkung. Hierzu wird die Taumelscheibenauslenkung der Motorsteuerung zugeführt, wobei bei steigendem Sollwert zugleich die Auslenkung der Taumelscheibe und mit etwas Verzögerung die Motordrehzahl erhöht wird.

Gemäß einem weiteren Ausführungsbeispiel ist in der US-A-5 865 602 vorgeschlagen, in Abhängigkeit von einem dem Elektromotor zugeführten Strom die Drehzahl zu erhöhen. Ebenso ist vorgeschlagen unterhalb eines Druckschwellwertes mit hoher Drehzahl zu fahren.

Es ist die Aufgabe der vorliegenden Erfindung eine energieeffiziente und einfach ansteuerbare elektrohydraulische Steueranordnung anzugeben.

Diese Aufgabe wird erfindungsgemäß durch eine elektrohydraulische Steueranordnung mit den Merkmalen des Patentanspruchs 1 gelöst.

Die erfindungsgemäße elektrohydraulische Steueranordnung ist mit einer verstellbaren Fluidpumpe und mit einem drehzahlvariablen elektrischen Antrieb ausgestattet. Eine Druckerfassungseinrichtung erlaubt die Erfassung des Fluiddrucks. Der Hauptregelkreis dieser elektrohydraulischen Steueranordnung besitzt ein Drehzahlstellglied des elektrischen Antriebs als Stellglied. Mittels des Hauptregelkreises lässt sich der Fluiddruck und damit z.B. eine durch eine Zylinder ausgeübte Kraft oder eine nachgeordnete Stellgröße wie z.B. eine Position oder eine Geschwindigkeit des Verbrauchers regeln. Ein Verdrängungsvolumenstellglied der Fluidpumpe wird mittels einer Nebenstellkette in Abhängigkeit von dem erfassten Fluiddruck angesteuert.

Die Stellgrößen lassen sich somit direkt mittels Sollwertvorgaben z.B. seitens einer Ablaufsteuerung und ohne spezielle Kenntnis des Aufbaus der elektrohydraulischen Steueranordnung vorgeben. So lässt sich z.B. eine Geschwindigkeit des Verbrauchers ohne Kenntnis der dafür benötigten Fördermenge oder Pumpendrehzahl vorgeben. Der Hauptregelkreis regelt durch Stellen der Drehzahl die Istwerte auf die geforderten Vorgabewerte ein. Die Nebenstellkette sorgt automatisch und ohne Zutun des Bedieners oder Programmierers der Ablaufsteuerung dafür, dass ein energieeffizienter, geräuscharmer und verschleißarmer Betrieb der elektrohydraulischen Steueranordnung erzielt wird.

Die Ansteuerung des Verdrängungsvolumenstellglieds in Abhängigkeit von dem Fluiddruck erlaubt es z.B. im Druckhaltebetrieb ein geringeres Schöpfvolumen einzustellen. Dadurch sinkt die Drehmomentbelastung des elektrischen Antriebs. Der Hauptregelkreis regelt ggf. die Drehzahl nach. Energetisch ungünstige Betriebszustände bei geringen Drehzahlen und hohen Drehmomenten lassen sich so vermeiden. Der elektrische Antrieb kann für ein kleineres Maximaldrehmoment ausgelegt werden. Dies erlaubt den Einsatz kostengünstiger elektrischer Antriebe. Bei Eilfahrten unter geringem Fluiddruck stellt der Nebenregelkreis die Verstellpumpe auf ein maximales Schöpfvolumen. Die Eilfahrten können mit niedrigen Drehzahlen und mit geringem Geräuschpegel im Effizienzmaximum der Verstellpumpe absolviert werden.

Dabei wird die Verstellung des Verdrängungsvolumenstellglieds durch die Nebenstellkette nach Art einer Störgrößenausregelung durch den Hauptregelkreis kompensiert. Die Nebenstellkette agiert dabei weitgehend autark von dem Hauptregelkreis und optimiert das Verhalten der Regelstrecke des Hauptregelkreises hinsichtlich Geräuschpegel, Energieeinsatz, Verschleiß und maximal erforderlichem Drehmoment des elektrischen Antriebs. Diese Eingriffe in die Regelstrecke werden von dem Hauptregelkreis automatisch, ohne Eingriff einer Ablaufsteuerung ausregelt.

Weitere vorteilhafte Ausgestaltungen sind in den Unteransprüchen angegeben.

Gemäß einer bevorzugten Ausbildung der vorliegenden Erfindung ist durch den Hauptregelkreis eine ablösende Druck-/Geschwindigkeitsregelung des Verbrauchers durchführbar. Bei der ablösenden Druck-/Geschwindigkeitsregelung sind dem Regler gleichzeitig ein Drucksollwert und ein Geschwindigkeitssollwert des Verbrauchers vorgegeben. Die Sollwerte dienen gleichzeitig als obere Grenzwerte der entsprechenden Stellgrößen. Der Regler regelt die Stellgröße aus, die den negativeren Regelfehler aufweist. Ein solcher Regler wird z.B. mit Komparatorschaltungen aufgebaut und ist für die Ansteuerung des Verdrängerstellglieds einer Verstellpumpe an sich bekannt. Das Regelprinzip lässt sich auch auf die Ansteuerung des Drehzahlstellglieds übertragen. Durch die Nebenstellkette wird dieses Regelverfahren hinsichtlich Geräuschpegel, Energieeinsatz etc. optimiert.

Eine besonders einfache Ausgestaltung sieht vor, dass die Nebenstellkette einen Druckschaltregler, insbesondere einen Zweipunktregler umfasst, durch den das Verdrängungsvolumen der verstellbaren Fluidpumpe zwischen einem vorgegebenen Minimalwert und einem Maximalwert in Abhängigkeit von einer vorgegebenen Druckschwelle umstellbar ist.

Der Einfluss der Nebenstellkette auf den Hauptregelkreis und folglich der Kompensationsbedarf im Hauptregelkreis ist geringer und feiner dosiert, wenn die Nebenstellkette einen Druckregler umfasst, der das Verdrängungsvolumenstellglied in Abhängigkeit von einem vorgebbaren Drucksollwert proportional ansteuert.

Wenn die Nebenstellkette eine hydromechanische Rückführung des Lastdrucks umfasst, vereinfacht sich der Aufbau der Nebenstellkette. Die hydromechanische Rückführung kann innerhalb der Verstellpumpe erfolgen.

Einen einfachen, kostengünstigen Aufbau der elektrohydraulische Steueranordnung erhält man auch dann, wenn die Nebenstellkette eine elektronische Rückführung des Lastdrucks umfasst. Ein elektronisch erfasstes Lastdrucksignal kann gleichermaßen dem Hauptregelkreis und der Nebenstellkette als Istwertsignal dienen.

Nachfolgend werden die vorliegende Erfindung und deren Vorteile unter Bezugnahme auf die in den Figuren dargestellten Ausführungsbeispiele näher erläutert.

Es zeigen:
- Fig. 1: ein vereinfachtes Schaltbild einer hydraulischen Achse, mit einem hydraulischen Verbraucher und einer elektrohydraulischen Steueranordnung, die eine Verstellpumpe, einen drehzahlvariablen elektrischen Antrieb und einen Druckschaltregler aufweist,
- Fig. 2: ein Beispiel für einen Druckverlauf in der elektrohydraulischen Steueranordnung nach Figur 1 mit einer Angabe der an der Verstellpumpe eingestellten Schwenkwinkel,
- Fig. 3: eine Abwandlung der in Figur 1 dargestellten elektrohydraulischen Steueranordnung, bei der der Schwenkwinkel der Verstellpumpe durch einen hydraulischen Regler mit hydromechanischer Druckerfassung regelbar ist, und
- Fig. 4: eine weitere Abwandlung der in Figur 1 dargestellten elektrohydraulischen Steueranordnung, bei der der Schwenkwinkel der Verstellpumpe durch einen elektrohydraulischen Regler mit einer elektronischen Druckerfassung regelbar ist.

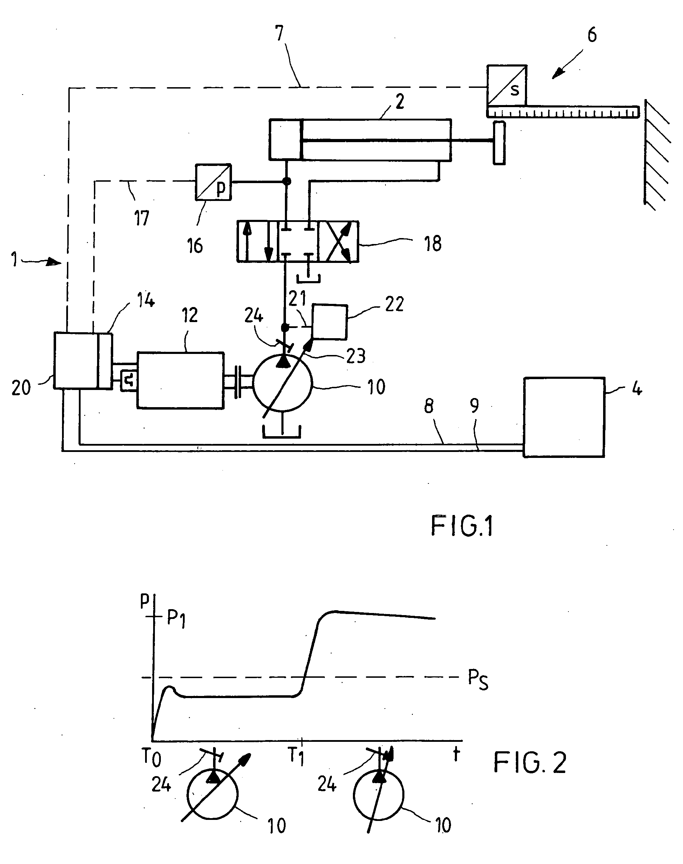

In der Figur 1 ist das vereinfachte Schaltbild einer elektrohydraulischen Achse dargestellt. Die elektrohydraulische Achse besitzt einen hydraulischen Motor, mit der ein Maschinenteil z. B. einer Spritzgießmaschine, einer Presse, einer Nibbelmaschine, etc bewegt wird. In dem dargestellten Ausführungsbeispiel ist der hydraulische Motor als Kolben-Zylinder-Einheit 2 ausgeführt. Die Kolben-Zylinder-Einheit 2 ist in einen Regelkreis eingebunden. Geregelte Stellgrößen können die Position, die Geschwindigkeit und / oder die Kraft sein. Die Kolben-Zylinder-Einheit 2 wird durch eine elektrohydraulische Steueranordnung 1 mit Druckmittel - im Folgendem auch Fluid genannt - angesteuert. Bestandteile der elektrohydraulischen Steueranordnung 1 sind eine Verstellpumpe 10, die hinsichtlich ihres Schöpfvolumens verschwenkbar ist, ein bürstenloser Elektromotor 12, vorzugsweise ein Drehstrommotor, sowie ein Motorregelgerät 14, durch das der Motor 12 mit einem frequenzvariablen Wechselstrom antreibbar ist. Das Motorregelgerät 14 ist einem Systemregler 20 unterlagert. Dem Systemregler 20 sind ein von einem Wegmesssystem 6 erfasstes Positionssignal der Kolben-Zylinder-Einheit 2 über die Signalleitung 7 und ein durch einen Drucksensor 16 erfasstes Drucksignal auf der Signalleitung 17 zugeführt. Das Wegmesssystem 6 bzw. der Drucksensor 16, der Systemregler 20, das unterlagerte Motorregelgerät 14, der Elektromotor 12, die Verstellpumpe 10 und die Kolben-Zylinder-Einheit 2 bilden einen geschlossenen Hauptregelkreis.

Weiterhin ist eine Ablaufsteuerung 4 vorgesehen, die einen Bewegungszyklus der elektrohydraulischen Achse steuert. Dazu werden über Signalleitungen 8 und 9 ein Drucksollwert, ein Geschwindigkeitssollwert oder ein Positionssollwert an den Systemregler 20 übertragen. Die Ablaufsteuerung 4 steuert ebenfalls das Wegeventil 18 an, durch das eine Bewegungsrichtung der Kolben-Zylinder-Einheit 2 festgelegt wird.

Eine Nebenstellkette umfasst das Stellglied 23 der Verstellpumpe 10, durch welches das Verdrängungsvolumen der Verstellpumpe 10 eingestellt wird, sowie einen Druckschaltregler 22, der mit dem Stellglied 23 verbunden ist. Der Druckschaltregler 22 erfasst den am Ausgang der Verstellpumpe 10 anstehenden Fluiddruck über die Steuerfluidleitung 23. Durch einen Mindestförderanschlag 24 ist das minimale Verdrängungsvolumen der Verstellpumpe 10 vorgegeben.

Die elektrohydraulische Achse mit der elektrohydraulischen Steueranordnung 1 lässt sich durch die Vorgabe von Positionssollwerten, Geschwindigkeitssollwerten bzw. Drucksollwerten in der an sich bekannten Weise ansteuern. Die unmittelbare Stellgröße des Hauptregelkreises ist die Drehzahl des Elektromotors 12. Im Rahmen einer Förderstromregelung, einer Druckregelung oder einer ablösenden Druck-/ Förderstromregelung lässt sich die Kolben-Zylinder-Einheit 2 nach Maßgabe der vorgegebenen Sollwerte fahren. Dazu wirkt der Systemregler 20 über das unterlagerte Motorregelgerät 14 auf den Elektromotor 12 ein. Dass Motorregelgerät 14 dient dabei als Drehzahlstellglied für den elektrischen Antrieb.

Durch die Nebenstellkette wird unabhängig von der Drehzahl des Elektromotors 12 und parallel zu dem zuvor beschriebenen Hauptregelkreis das Verdrängungsvolumen der Verstellpumpe 10 gesteuert. In dem Druckschaltregler 22 ist eine Druckschwelle Pₛ vorgegeben, aufgrund der das Verdrängungsvolumen der Verstellpumpe 10 zwischen einem Maximalwert und einem durch den Mindestförderanschlag 24 vorgegebenen Minimalwert geschaltet wird. Abhängig von ihrem Ausgangsdruck nimmt die Verstellpumpe 10 damit eine von zwei Grenzeinstellungen des Stellglieds 23 ein, nämlich einer Maximalstellung bei einem Druck unterhalb der Druckschwelle P_{S} und in einer Minimalstellung, am Anschlag 24, bei einem Druck oberhalb der Druckschwelle Pₛ. Der Druckschaltregler 22 kann gemäß diesem Ausführungsbeispiel als Zweipunktregler dargestellt werden. Ggf. kann es wünschenswert sein, einen Druckschaltregler mit mehr als zwei Schaltzuständen zu verwenden.

In Figur 2 ist anhand eines beispielhaften Druckverlaufs am Ausgang der Verstellpumpe 10 die zugehörige Einstellung des Stellglieds 23 angegeben. In einem ersten Zeitbereich T₀ bis T₁ befindet sich der Druck unterhalb der Druckschwelle Pₛ Demzufolge ist die Verstellpumpe 10 auf ihr maximales Verdrängungsvolumen eingestellt. Ab dem Zeitpunkt T₁ überschreitet der Ausgangsdruck die Druckschwelle Pₛ. Folglich bewirkt der Druckschaltregler 22 eine Verstellung des Stellglieds 23 an den Mindestförderanschlag 24. Der am Verbraucher 2 wirksame Druck, so auch der nach dem Zeitpunkt T₁ eingenommene Druck P₁ wird dabei durch den Hauptregelkreis, über die Rückführung durch den Drucksensor 16 und die Verstellung der Motordrehzahl geregelt. Die um den Zeitpunkt T₁ durch die Verringerung des Verdrängungsvolumens der Pumpe 10 eintretende Beeinflussung der Regelschleife wird durch eine Erhöhung der Motordrehzahl - wie eine Störgröße - ausgeregelt.

Die beschriebene Regelung, bei der ein Hauptregelkreis sowie die Nebenstellkette weitestgehend unabhängig bzw. autark voneinander auf eine gemeinsame Regelstrecke einwirken, erlaubt eine Modifikation der Hauptregelstrecke hinsichtlich Energieeffizienz, Geräuschoptimierung und Reduzierung des Maximaldrehmoments. So wird bei Überschreiten der Druckschwelle Pₛ, wenn z. B. ein Druck P₁, der höher ist als der Druck Pₛ, gehalten werden soll, das durch den Elektromotor 12 aufzubringende maximale Drehmoment durch die Reduzierung des Verdrängungsvolumens der Verstellpumpe 10 deutlich gesenkt. Bei Eilfahrten unter geringem Druck, z. B. im Zeitabschnitt T₀ bis T₁, ist das volle Verdrängungsvolumen der Verstellpumpe 10 verfügbar, um die Kolben-Zylinder-Einheit 2 bei niedrigen Drehzahlen leise und energiesparend zu verfahren. Die Reglerstruktur des Hauptregelkreises und insbesondere der Systemregler 20 kann einem herkömmlichen Druckregler, Förderstromregler oder Positionsregler, bzw. einer kombinierten Druck-/Förderstromregelung entsprechen. Die durch die Nebenstellkette, d. h. den Druckschaltregler 22 und das Stellglied 23 verursachte Beeinflussung der Regelstrecke wirkt sich wie eine Störung aus und wird durch den Systemregler 20 ohne weiteres kompensiert, zumal die Beeinflussung des Hauptregelkreises durch die Nebenstellkette im Vergleich zum Hauptregelkreis als niederfrequente Störung konzipiert werden kann.

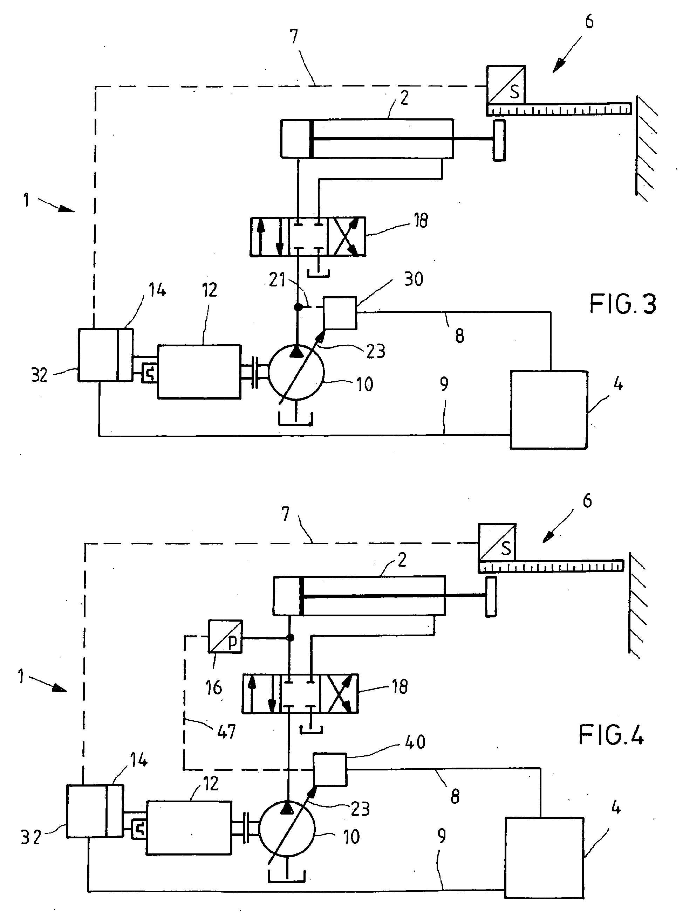

In der Figur 3 ist gemäß eines zweiten Ausführungsbeispiels der vorliegenden Erfindung eine Abwandlung der in Figur 1 dargestellten elektrohydraulischen Achse, bzw. der elektrohydraulischen Steueranordnung 1 dargestellt. Es werden im Folgenden vornehmlich die Unterschiede zur Steueranordnung 1 gemäß dem zuvor beschriebenen Ausführungsbeispiel ausgeführt.

Die elektrohydraulische Steueranordnung 1 gemäß des zweiten Ausführungsbeispiels ist anstelle des Druckschaltreglers 22 mit einem proportional verstellbaren hydromechanischen Regler 30 versehen, der die Ansteuerung des Stellglieds 23 der Regelpumpe 10 vornimmt. Der hydromechanische Pumpenregler 30 erfasst den Ausgangsdruck der Verstellpumpe 10 über die Steuerfluidleitung 21 und steuert deren Stellglied 23 nach Maßgabe eines ihm auf der Signalleitung 8 zugeführten Drucksollwerts im Rahmen einer Druckregelung an.

Der Systemregler ist als Positions- oder Geschwindigkeitsregler 32 ausgeführt. Der Hauptregelkreis beinhaltet also neben dem Positions- oder Geschwindigkeitsregler 32 das unterlagerten Motorregelgerät 14, den Elektromotor 12, die Verstellpumpe 10, die Kolben-Zylinder-Einheit 2 sowie das Wegmesssystem 6 und die Signalleitung 7. Ein Positionssollwert oder ein Geschwindigkeitssollwert ist dem Regler 32 über die Signalleitung 9 zugeführt.

Der an der Kolben-Zylinder-Einheit 2 anstehende Druck kann weitestgehend unabhängig von der Drehzahl des Elektromotors 12 durch den hydromechanischen Pumpenregler 30 geregelt und begrenzt werden. Wird der Drucksollwert nicht erreicht, hält der Pumpenregler 30 das Stellglied 23 an einem Maximalwert und die Geschwindigkeits- bzw. Positionsregelung der Kolben-Zylinder-Einheit 2 erfolgt über den Geschwindigkeitsregler / Positionsregler 32 des Hauptregelkreises.

Eine weitere Variation der in Figur 1 dargestellten Schaltung ist in der Figur 4 angegeben. Die darin dargestellte elektrohydraulische Steueranordnung 1 zur Ansteuerung der Kolben-Zylinder-Einheit 2 weicht nur geringfügig von der in Figur 3 dargestellten elektrohydraulischen Steueranordnung 1 ab. Anstelle der hydromechanischen Erfassung des Ausgangsdrucks der Verstellpumpe 10 ist ein elektrischer Drucksensor 16 vorgesehen. Über eine Signalleitung 47 wird der erfasste Druck einem elektronischen Pumpenregler 40 zugeführt. Dieser erhält auf der Signalleitung 8 einen Drucksollwert.

Die Funktion der elektrohydraulischen Steueranordnung 1 gemäß Figur 4 entspricht der Funktion der elektrohydraulischen Steueranordnung 1 gemäß Figur 3, mit dem Unterschied, dass die Rückführung des Fluiddrucks nicht hydromechanisch sondern elektronisch erfolgt. Dies erlaubt beispielsweise den Einsatz von vielseitig parametrierbaren Digitalreglern. Des Weiteren ist auch eine gemeinsame Integration des Geschwindigkeitsreglers / Positionsreglers 32, des Motorregelgeräts 14 - zumindest dessen Reglerlogik - und des elektronischen Pumpenreglers 40 auf einem einzigen Mikrokontroller denkbar.

Es sei noch angemerkt, dass die elektrohydraulische Steueranordnung 1 nicht auf die Ansteuerung von Linearmotoren wie der Kolben-Zylinder-Einheit 2 beschränkt ist. Anstelle der Kolben-Zylinder-Einheit 2 kann auch ein Rotationsmotor treten. Dessen Position wird vorzugsweise über ein Drehwinkelmesssystem erfasst und dem System regler 20 bzw. dem Geschwindigkeitsregler / Positionsregler 32 zugeführt.

Gemäß der vorliegenden Erfindung bildet eine elektrohydraulische Steueranordnung mit einem durch diese angesteuerten hydraulischen Verbraucher einen Hauptregelkreis. Zusätzlich wirkt eine Nebenstellkette auf die Regelstrecke ein, um diese hinsichtlich einer Geräuschverminderung, dem Energieverbrauch und einer Reduzierung eines maximalen Drehmoments zu optimieren. Die Nebenstellkette kann weitgehend autark nach Maßgabe z. B. einer vorgegebenen Druckschwelle auf die Regelstrecke einwirken. Der Hauptregelkreis gleicht die Einwirkung im Rahmen einer Störgrößenkompensation unter Verbesserung der zuvor genannten Eigenschaften aus. Die Nebenstellkette kann ebenso als vollwertiger Druckregelkreis ausgelegt sein, um im Rahmen einer proportionalen Druckregelung den am hydraulischen Verbraucher anstehenden Druck zu begrenzen und zu regeln.

## Patentansprüche

1. Elektrohydraulische Steueranordnung zur Ansteuerung eines hydraulischen Verbrauchers (2), umfassend eine hinsichtlich ihres Verdrängungsvolumens verstellbare Fluidpumpe (10), einen zum Antreiben der Fluidpumpe an diese gekoppelten drehzahlvariablen elektrischen Antrieb (12, 14) sowie eine Druckerfassungseinrichtung (16, 21) zum Erfassen eines Fluiddrucks,
**dadurch gekennzeichnet, dass**
ein Hauptregelkreis (20,14,12,10, 2, 6, 7; 32) vorgesehen ist, dessen Stellglied ein Drehzahlstellglied (14) des elektrischen Antriebs (12, 14) ist und durch den der Fluiddruck und/oder eine nachgeordnete Stellgröße erfassbar und regelbar ist, gemäß einer dem Hauptregelkreis zugeführten Sollwertvorgabe, und
dass mittels einer Nebenstellkette (22; 30; 40) ein Verdrängungsvolumenstellglied (23) der Fluidpumpe (10) in Abhängigkeit von dem erfassten Fluiddruck ansteuerbar ist und
dass eine Verstellung des Verdrängungsvolumenstellglieds (23) durch die Nebenstellkette (22) nach Art einer Störgrößenausregelung durch den Hauptregelkreis (20,14, 12,10, 2, 6, 7) kompensierbar ist.

2. Elektrohydraulische Steueranordnung nach Anspruch 1, **dadurch gekennzeichnet, dass** durch den Hauptregelkreis (20,14, 12,10, 2, 6, 7) eine ablösende Druck-/Geschwindigkeitsregelung des Verbrauchers (2) durchführbar ist.

3. Elektrohydraulische Steueranordnung nach einem der Ansprüche 1 oder 2, **dadurch gekennzeichnet, dass** die Nebenstellkette (22) einen Druckschaltregler, insbesondere einen Zweipunktregler umfasst, durch den das Verdrängungsvolumen der verstellbaren Fluidpumpe (10) zwischen einem vorgegebenen Minimalwert und einem Maximalwert in Abhängigkeit von einer vorgegebenen Druckschwelle (Pₛ) umstellbar ist.

4. Elektrohydraulische Steueranordnung nach einem der Ansprüche 1 oder 2, **dadurch gekennzeichnet, dass** die Nebenstellkette (30; 40) einen Druckregler umfasst, der das Verdrängungsvolumenstellglied (23) in Abhängigkeit von einem vorgebbaren Drucksollwert proportional ansteuert.

5. Elektrohydraulische Steueranordnung nach Anspruch 3 oder 4, **dadurch gekennzeichnet, dass** die Nebenstellkette (30) eine hydromechanische Rückführung (21) des Lastdrucks umfasst.

6. Elektrohydraulische Steueranordnung nach Anspruch 3 oder 4, **dadurch gekennzeichnet, dass** die Nebenstellkette (40) eine elektronische Rückführung (16, 47) des Lastdrucks umfasst.

## Claims

1. Electrohydraulic control arrangement for actuating a hydraulic consumer (2), comprising a fluid pump (10) with an adjustable displacer volume, a variable-speed electric drive (12, 14) which is coupled to the fluid pump in order to drive it, and a pressure detection device (16, 21) for detecting a fluid pressure, **characterized in that** a main control circuit (20, 14, 12, 10, 2, 6, 7; 32) is provided, the actuator of which is a speed actuator (14) of the electric drive (12, 14), and by way of which the fluid pressure and/or a subordinate actuating variable can be detected and controlled, according to a setpoint value stipulation which is fed to the main control circuit, and **in that** a displacer volume actuator (23) of the fluid pump (10) can be actuated by means of an auxiliary adjusting chain (22; 30; 40) as a function of the detected fluid pressure, and **in that** an adjustment of the displacer volume actuator (23) can be compensated for by the auxiliary adjusting chain (22) in the manner of a disturbance variable compensation by the main control circuit (20, 14, 12, 10, 2, 6, 7).

2. Electrohydraulic control arrangement according to Claim 1, **characterized in that** a substitute pressure/speed control of the consumer (2) can be carried out by the main control circuit (20, 14, 12, 10, 2, 6, 7).

3. Electrohydraulic control arrangement according to either of Claims 1 and 2, **characterized in that** the auxiliary adjusting chain (22) comprises a pressure switching regulator, in particular a two-position regulator, by which the displacer volume of the adjustable fluid pump (10) can be adjusted between a predefined minimum value and a maximum value as a function of a predefined pressure threshold (Pₛ).

4. Electrohydraulic control arrangement according to either of Claims 1 and 2, **characterized in that** the auxiliary adjusting chain (30; 40) comprises a pressure regulator which actuates the displacer volume actuator (23) proportionally as a function of a predefinable setpoint pressure value.

5. Electrohydraulic control arrangement according to Claim 3 or 4, **characterized in that** the auxiliary adjusting chain (30) comprises a hydromechanical feedback (21) of the load pressure.

6. Electrohydraulic control arrangement according to Claim 3 or 4, **characterized in that** the auxiliary adjusting chain (40) comprises an electronic feedback (16, 47) of the load pressure.

## Revendications

1. Système de commande électro-hydraulique pour la commande d'un consommateur hydraulique (2), comportant une pompe à fluide (10) réglable en termes de son volume de refoulement, un entraînement (12, 14) électrique à vitesse de rotation variable accouplé à cette pompe à fluide pour entraîner cette dernière ainsi qu'un dispositif de détection de pression (16, 21) pour détecter une pression de fluide,
**caractérisé en ce**
**qu'**il est prévu un circuit de régulation principal (20, 14, 12, 10, 2, 6, 7 ; 32) dont l'organe de réglage est un organe de réglage de vitesse de rotation (14) de l'entraînement électrique (12, 14) et au moyen duquel la pression de fluide et/ou une grandeur de réglage subordonnée peu(ven)t être détectée(s) et régulée(s), conformément à une prescription de valeur de consigne fournie au circuit de régulation principal et
en ce qu'au moyen d'une chaîne de réglage secondaire (22 ; 30 ; 40), un organe de réglage de volume de refoulement (23) de la pompe à fluide (10) peut être commandé en fonction de la pression de fluide détectée et
en ce qu'un réglage de l'organe de réglage de volume de refoulement (23) peut être compensé au moyen de la chaîne de réglage secondaire (22) à la manière d'une régulation de grandeur perturbatrice au moyen du circuit de régulation principal (20, 14, 12, 10, 2, 6, 7).

2. Système de commande électro-hydraulique selon la revendication 1, **caractérisé en ce qu'**une régulation de pression/vitesse de substitution du consommateur (2) peut être effectuée au moyen du circuit de régulation principal (20, 14, 12, 10, 2, 6, 7).

3. Système de commande électro-hydraulique selon la revendication 1 ou 2, **caractérisé en ce que** la chaîne de réglage secondaire (22) comporte un régulateur de commutation de pression, en particulier un régulateur à deux positions, au moyen duquel le volume de refoulement de la pompe à fluide (10) réglable peut être ajusté entre une valeur minimale prédéfinie et une valeur maximale en fonction d'un seuil de pression prédéfini (Pₛ).

4. Système de commande électro-hydraulique selon la revendication 1 ou 2, **caractérisé en ce que** la chaîne de réglage secondaire (30 ; 40) comporte un régulateur de pression qui commande de manière proportionnelle l'organe de réglage de volume de refoulement (23) en fonction d'une valeur de consigne de pression pouvant être prédéfinie.

5. Système de commande électro-hydraulique selon la revendication 3 ou 4, **caractérisé en ce que** la chaîne de réglage secondaire (30) comporte un asservissement hydromécanique (21) de la pression de charge.

6. Système de commande électro-hydraulique selon la revendication 3 ou 4, **caractérisé en ce que** la chaîne de réglage secondaire (40) comporte un asservissement électronique (16, 47) de la pression de charge.
